# EUROPEAN PATENT APPLICATION

(11) **EP 1 898 296 A1**
(43) Date of publication of application: **12.03.2008**
(21) Application number: 06731136.5
(22) Date of filing: 05.04.2006
(51) Int. Cl.: G06F 1/26, G06F 13/00, G11B 31/00, G10H 1/00, H04N 5/76

(54) **INFORMATION PROCESSING APPARATUS AND PROGRAM**

(30) Priority: 06.04.2005 JP 2005109626
(71) Applicant: Pioneer Corporation, Tokyo 153-8654 (JP)
(72) Inventor: FURUTA, Hirotaka, Pioneer Corp., Tokorozawa Works, Tokorozawa-shi, Saitama 3598522 (JP)
(74) Representative: Tappe, Hartmut
(86) International application number: PCT/JP2006/307188
(87) International publication number: WO 2006/109634

(57) **Abstract**

Improvement of the convenience of a device while reducing the cost under an environment in which a plurality of devices are connected. A plurality of devices D is connected to a terminal TA of a recording/reproduction device A. The plurality of devices D are classified into classifications, and for each classification the control unit 50 of the recording/reproduction device A selective sets some devices belonging to that classification to the active state, and sets the other devices belonging to that classification to the inactive state. When the power to a device that is in the active state is turned OFF, the control unit 50 changes the status of another device D that belongs to the same classification as that device D and that is in the inactive state to the active state.

## Description

### Technical Field

This invention relates to an information processing device and to the control of communication with devices that are connected to that information processing device.

### Background Art

Various devices, such as a device for storing data that is the object of processing, or a device for operating an information processing device are connected to an information processing device that has functions for processing various kinds of information. In the case where this kind of information processing device executes communication with all of these devices at the same time, a computation device having high-level processing capability, and a large-capacity memory device becomes necessary, and the construction cost of the information processing device would become high. In order to solve this problem construction is disclosed (refer to Japanese patent application 2003-233977 (paragraph [0014]) in which of the signals from a plurality of remote control devices, only the signal from the remote control device that is operated directly after the power to a DVD (Digital Versatile Disk) changer has been turned ON will be valid.

### Disclosure of the invention

### Problems to be solved by the Invention

However, in this construction, after one remote-control device has been selected as a valid device, the user is not able to use another remote-control device, so there is a problem of inconvenience. It is possible for the user to change the valid remote-control device by turning the power to the DVD changer OFF and ON again and then operating the desired remote-control device, however, in this case, it is necessary to perform the troublesome operation of turning the power OFF and then back ON again. Taking this problem into consideration, it is the object of the present invention to improve convenience while lowering cost of the device even when a plurality of devices is connected.

### Means for Solving the Problems

An information processing device of the present invention is provided with: a management device for setting a plurality of devices to either an active state or an inactive state; a detection device for detecting when operation of a device that is in the active state stops; and a change device for changing the status of another device that is the inactive state to the active state when the detection device detects that operation of a device has stopped.

The information processing device of the present information is, wherein when the detection device detects that the operation of a device in the active state has stopped, the change device changes the status of another device that was connected to the information processing device after the detected device and that is in the inactive state to the active state.

The information processing device of the present information is further provided with: a first memory device for correlating and storing ID information for each device that is connected to the information processing device, and status information that indicates whether the devices are in the active state or inactive state; wherein a change device changes the status of a device, which is identified by ID information that is correlated with status information that indicates that the device in the inactive state, to the active state.

The information processing device of the present information is, wherein the devices that are connected to the information processing device are classified into a plurality of classifications; and the management device sets the status of each of the devices in each classification to either the active state or inactive state.

The information processing device of the present information is, further provided with: a second memory device for storing classification information that indicates the classification of each device that is connected to the information processing device; wherein the change device changes the status of another device, which is in the inactive state and whose classification information that is stored in the second memory device is the same as that of the device whose operation is detected by the detection device to have stopped, to the active state.

The information processing device of the present information is further provided with: an assignment device for assigning connection numbers to devices in the order of connection to the information processing device; and wherein when the detection device detects that the operation of a device has stopped, the change device specifies the classification of the devices in the order of connection numbers that were assigned by the assignment device, and when a device is specified that has the same classification as the device whose operation what detected by the detection device to have stopped, changes the status of the specified device from the inactive state to the active state.

The information processing device of the present invention is further provided with: a judgment device for determining whether or not specified data is stored in devices that are connected to the information processing device; wherein the management device selectively sets devices, which were determined by the judgment device to store the specified data, to the active state; and when the detection device detects that the operation of a device in the active state has stopped, the change device changes the status of another device, which is in the inactive state and which was determined by the judgment device to store the specified data, to the active state.

A program of the present invention causes a computer to execute: a management process of setting a plurality of devices to either an active state or an inactive state; a detection processing of detecting when operation of a device that is in the active state stops; and a change process of changing the status of another device that is the inactive state to the active state when the detection device detects that operation of a device has stopped.

### Brief Description of the Drawings

FIG. 1 is a block diagram showing the state when a plurality of devices are connected to the recording/reproduction device of a first embodiment of the invention.
FIG. 2 is a block diagram showing the construction of a recording/reproduction device.
FIG. 3 is a drawing showing detailed contents of connection information.
FIG. 4 is a flowchart of the operation of the control unit of a recording/reproduction device.
FIG. 5 is a drawing showing the contents of connection information when a device is connected to a recording/reproduction device.
FIG. 6 is a drawing showing the contents of connection information when a device is connected to the recording/reproduction device.
FIG. 7 is a drawing showing the contents of connection information when a device is connected to the recording/reproduction device.
FIG. 8 is a drawing showing the contents of connection information when a device is connected to the recording/reproduction device.
FIG. 9 is a drawing showing the state when a device is turned OFF and the contents of connection information after that power is turned OFF.
FIG. 10 is a drawing showing the contents of connection information and a table that are stored in the recording/reproduction device of a second embodiment of the invention.
FIG. 11 is a flowchart showing the operation of the control unit of a recording/reproduction device.
FIG. 12 is a drawing showing the state of a device connected to the recording/reproduction device and the contents of connection information and table.
FIG. 13 is a drawing showing the state of a device connected to the recording/reproduction device and the contents of connection information and table.
FIG. 14 is a drawing showing the state of a device connected to the recording/reproduction device and the contents of connection information and table.
FIG. 15 is a drawing showing the state when a device is disconnected and the contents of connection information and table after disconnection.
FIG. 16 is a flowchart showing the operation of the control unit of a recording/reproduction device of a third embodiment of the invention.
FIG. 17 is a drawing showing state of a device connected to a recording/reproduction device, and the contents of connection information when connected.
FIG. 18 is a drawing showing state of a device connected to a recording/reproduction device, and the contents of connection information when connected.
FIG. 19 is a drawing showing the state when a device is disconnected and the contents of connection information after the device is disconnected.

### Description of Reference Numerals

- A ···: Delay unit
- A1 ···: Adding unit
- A2 ···: Parameter-detection unit
- 50 ···: Control unit
- 51 ···: Memory
- 53 ···: Display unit
- 55 ···: USB controller
- 561 ···: USB host controller
- 562 ···: USB peripheral controller

### Best Mode for carrying out the Invention

The preferred embodiments of the invention will be explained. The information processing device of a first embodiment of the invention comprises: management means for setting all of the devices to connected to the information processing device to either the active state or inactive state; detection means for detecting when operation of a device in the active state stops; and change means for changing the state of another device that is in the inactive state to the active state when the detection means detects that operation of a device has stopped. Each of these means can be realized by a computation processing device such as a CPU (Central Processing Unit) executing a program, or can be realized by hardware such as a DSP (Digital Signal Processor) that is special for the processing of each means.

The 'active state' referred to in this embodiment is the state according to the relationship with the information processing device in which the original function of a device is allowed. For example, the state in which data transmission from a device to the information processing device or data transmission from the information processing unit to a device is allowed. On the other hand, the "inactive state' referred to in this embodiment is a state in which the operation of a device (in other words, communication between the information processing device and the device) is more restricted than the active state, and typically is a state according to the relationship with the information processing device in which the original function of a device is not allowed.

For example, for a keyboard, mouse or remote control that outputs operation data for identifying the contents of operation by a user, or for an input device (so-called MIDI instrument) that outputs operation data according to the MIDI (Musical Instrument Digital Interface) standard, the state in which outputting operation data to the information processing device is allowed (or the state in which the operation by the information processing device to execute a process according to operation data is allowed) is the active state.

Also, for a memory device such as a semiconductor memory that stores various kinds of data such as image data or audio data, or a memory reader that picks up this kind of data, the state in which the operation of reading data and outputting that data to the information processing unit, or the operation of transmitting data that is to be stored in the memory device from the information processing device to the memory device is allowed is the active state. Similarly, for an imaging device such as a digital camera, digital video camera or scanner, the state in which the operation by which these devices output image data generated by the devices to the information processing device is allowed is the active state.

Furthermore, for a output device that outputs audio or images, the state in which the operation by which the information processing device outputs data that indicates the object of output to the output device is allowed (the state in which the device is allowed to output audio or images based on this kind of data) is the active state. For example, in an audio output device such as a speaker or headphone, the state in which the operation by which the information processing device transmits data indicating the audio to be output by the device is allowed is the active state. Moreover, for an image output device such as a display or printer, the state in which the operation by which the information processing device outputs data to the device indicating the image to be output is allowed (also, the state in which displaying an image by the display or printing an image by the printer is allowed) is the active state.

In this embodiment, the devices connected to the information processing device are set to be either active or inactive (in other words, the active state is selectively set), so when all of the devices connected are taken to be set to the active state, it is possible to reduce the processing capability and memory capacity required by the information processing device more than in the case of construction in which the information processing device performs communication in parallel with all of the devices.
Therefore, it is possible to reduce the manufacturing cost of the information processing device. Also, in this embodiment, with the stopping of the operation of a device in the active state taken to be a triggering event, another device that was in the inactive state up to that point moves to the active state. Therefore, it is not necessary for the user to perform the troublesome work of selecting the device to become active, or to turn the power to the information processing device OFF and then back ON again. In other words, with this embodiment, it is possible to both reduce cost and improve convenience. Also, in addition to the construction of this embodiment, construction in which the user can arbitrarily select a device to become active can also be employed.

In this embodiment, the state in which a device is connected to the information processing device device a state in which the existence of the device is recognized by the information processing device. For example, the state in which a device is connected to the information processing device by way of a transmission line (in other words, a wired connection) and the device is recognized by the information processing device, or the state in which the device exchanges information wirelessly with the information processing device and that device is recognized by the information processing device, is the state in which the device is connected to the information processing device. In other words, the state in which a device is connected to the information processing device can be considered to be a state in which information related to the device (for example, information indicating the classification of the device, or information for identifying the device) is acquired by the information processing device.

Also, the detection device of this embodiment, detects that operation of a device stops when change occurs such as when the power to a device that was ON is turned OFF, or when a device that was connected to the information processing device by transmission lines is disconnected for some reason (for example, disconnection due to trouble caused by the occurrence of overcurrent, or disconnection by the user). For example, with the elapse of time as a condition, for a device that comprises a function of moving from a first mode in which power is supplied to the components of the device to a second mode in which power to a specified component or components of the device is stopped, this corresponds to an 'operation stop' that is detected by the detection device when moving from the first mode to the second mode.

The rules when the management device selects a device to set to the active state, and the rules when the change device selects a device to be changed from the inactive state to the active state is arbitrary.
However, often the user will desire to use devices in the order that they were connected. Therefore, when the detection device detects that operation of a device in the active state has stopped, it is preferred that the change device change another device, which is inactive and that was connected to the information processing device after the detected device, to the active state.

More specifically, in this embodiment, there is a first memory device that correlates and stores ID information for each device that is connected to the information processing device, and state information that indicates whether the devices are in the active state or inactive state; and the change device changes a device, which is identified by the ID information that is correlated with the state information that indicates that the device is in the inactive state, to the active state.

In construction where the devices connected to the information processing device are classified into a plurality of classifications, the management device can be such that it selects whether to set a device to the active state or inactive state for each classification. In other words, the management device selectively sets a specified number (one or more) of devices to the active state for each of a plurality of classifications. With this kind of construction, all of the devices that belong to an individual classification are simultaneously set to the active sate, so it is possible to improve the convenience of the information processing device. This is particularly advantageous when classifying the devices that can be connected to the information processing device to a classification according to function because a plurality of devices having different functions can be used at the same time. The method for classifying the devices is not limited to this. For example, devices can be classified into classifications according to manufacturer or model.

The construction for determining the classification of each device is arbitrary. For example, in construction that comprises a second memory device for storing classification information that indicates the classification of devices that are connected to the information processing device, the change device can change an inactive device for which classification information that is common with that of a device whose operation was detected by the detection device to have stopped and that is stored in the second memory device to the active state (see the first embodiment described later). In the embodiments, for construction that comprises both a first and second memory device, there is no problem in realizing each of the memory device by a separate memory device, or realizing each memory device by a single memory device.
For construction that comprises assignment device for assigning a connection number to each device in the order that it was connected to the information processing device, when the detection device detects a stop of operation, the change device can be such that it specifies the order of classification for each device in the order of connection numbers that were assigned by the assignment device, and when a device is specified that has the same classification as the device whose operation was detected by the detection device to have stopped, the change means changes the state of that specified device from the inactive state to the active state (see second embodiment described later).
With this construction, it is not necessary to save classification information for each device in the information processing device, so it is possible to reduce the memory capacity that is required by the information processing device.

A device that comprises a function of storing various kinds of data such as image data and audio data (for example, a memory device or imaging device) can be connected to the information processing device. Even when this kind of device is connected to the information processing device, data that is to be processed by the information processing device must be stored in that device, and there is little practical advantage to set the device to the active state.
Therefore, the preferred embodiment of the invention further comprises a judgment means for determining whether or not specified data is stored in a device, and the management means selectively sets a device that is determined by the judgment means to be a device that stores the specified data to the active state, and when the detection means detects that the operation of a device in the active state has stopped, the change means changes the state of another device that is in the inactive state and that also was determined by the judgment means to store the specified data to the active state. With this form of the invention, only devices that store the specified data (or in other words devices that can display their original function in relationship with the information processing device) are set to the active state, so it is possible to reduce unneeded processing of setting devices that do not store the specified data and that do not display their original function to the active state.

The judgment means executes judgment based on information that indicates the attributes of data stored in the device. A typical example of the information used for this judgment is an extension that indicates the type of data (file). For example, the judgment means determines whether or not data (image data) having the extension 'jpeg', 'tiff' or 'gif' is stored in a device.

The type of data that is judged by the judgment means can be the same for each classification of the devices, or can be different for each classification of the devices. For example, when a digital camera and digital video camera are classified in separate classifications, for devices that belong to the digital camera classification, the judgment means determines whether or not there is data having the extension 'jpeg', and for devices that belong to the digital video camera classification, the judgment means determines whether or not there is data having either the extension 'jpeg' or 'mpeg'.

Furthermore, the preferred form of the embodiments further comprises a notification means of notifying the user of a device that the management means has set to the active state. With this form of the invention, the user can check which devices are in the active state, so it improves the convenience of the information processing device. The notification means can be means that displays an image on a display device for identifying devices that are in the active state, or can be means that outputs audio to an audio device for identifying the active devices.

Also, as another form of the invention is a program that is executed by a computer. This program cause a computer to execute: a management process of setting each of the devices that are connected to the computer to either the active state or inactive state; a detection process of detecting when the operation of a device in the active state has stopped; and a change process of changing another device that was in the inactive state up to this point to the active state when operation of the device was detected in the detection process to have stopped.

### [Embodiments]

Next, the preferred embodiments of the invention will be explained in detail. In the embodiments described below, an example of a device that records and reproduces image data or audio data (hereafter, referred to as 'recording/reproduction device') is explained as the information processing device, however, the range for which the invention can be applied is not limited by this form of the invention.

### <A: First Embodiment>

### <A-1: Construction of the First Embodiment>

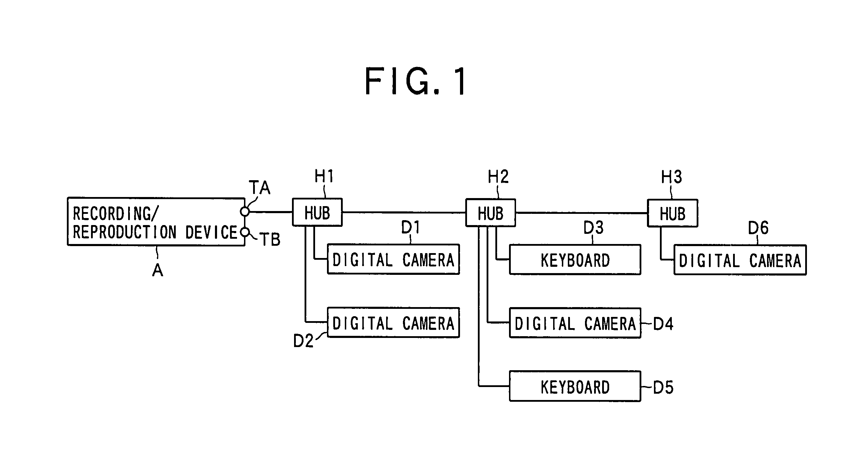

FIG. 1 is a block diagram showing the relationship between the recording/reproduction device of this embodiment and peripheral devices connected to it.
This recording/reproduction device A has a terminal TA and terminal TB that comply with the USB (Universal Serial Bus) standard. A plurality of devices is directly connected to terminal TA and terminal TB or is indirectly connected by way of another device. In FIG. 1, two digital cameras D1 and D2 are connected to the recording/reproduction device A by way of a hub (USB hub) H1 that is connected to the terminal TA by a cable, one digital camera D4 and two keyboards D3 and D5 are connected to the recording/reproduction device A by way of a hub H2 that is connected to the hub H1 by a cable, and one digital camera D6 is connected to the recording/reproduction device A by way of a hub H3 that is connected to the hub H2 by a cable . The recording/reproduction device A exchanges various information with these devices (hereafter, simply referred to as 'devices D').

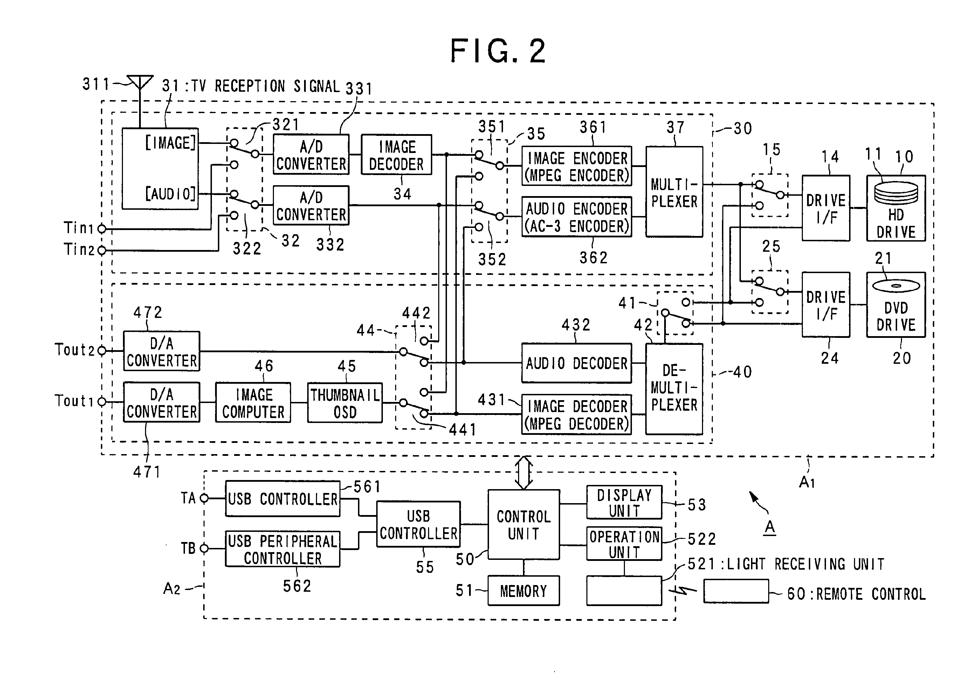

FIG. 2 is a block diagram showing the construction of the recording/reproduction device A. As shown in FIG. 2, the recording/reproduction device A comprises a recording/reproduction system A1 that executes recording and reproduction of image data or audio data, and a control processing system A2 that controls the operation of the recording/reproduction system A1.

The recording/reproduction line A1 system comprises: a hard disk (hereafter, referred to as HD) drive 10, a DVD drive 20, recording processing system 30 and reproduction processing system 40. Of these, the HD drive 10 drives a HD 11 on which image data or audio data is recorded, and writes or reads that data. On the other hand, the DVD drive 20 drives a DVD 21 on which image data or audio data is recorded and writes or reads that data.

The recording/reproduction system 30 is means for generating data to be stored on the HD 11 or DVD 21 and for executing various processing of that data. The TV receiver 31 shown in FIG. 2 comprises an antenna 311 that receives signals (for example, RF signals such as VHF, BS or the like) that are transmitted from broadcast stations, and is a means for converting the signal that is received from the bandwidth that the user has selected and tuned into to an IF (intermediate frequency) signal, then demodulating that signal to a image signal and audio signal and outputting the result. An input conversion unit 32 that is located in a later stage of the TV receiver 31 comprises: a switch 321 that selects either the image signal that is output from the TV receiver 31 or the image signal that is supplied from input terminal Tin1 and outputs it to an A/D converter 33; and a switch 322 that selects either the audio signal that is output from the TV receiver 31 or the audio signal that is supplied from the input terminal Tin2 and outputs it to an A/D converter 332. The switch 321 and switch 322 are controlled by the control processing system A2.

Digital image data that is generated from the analog image signal by the A/D converter 331 is supplied to an image decoder 34. The image decoder 34 converts this image data to image data having another format such as NTSC, and outputs the result to an input switching unit 35 and reproduction system 40. Similarly, digital audio data that is generated from the analog audio signal by the A/D converter 332 is supplied to the input switching unit 35 and reproduction processing system 40.

Image data and audio data that is read from the HD 11 or DVD 21 in order to dub data from either the HD 11 or DVD 21 to the other is supplied from the reproduction processing system 40 to the input switching unit 35. The input switching unit 35 comprises: a switch 351 selects either the image data that was output from the image decoder 34 or the image data that was supplied from the reproduction processing system 40, and outputs it to a image encoder 361; and a switch 352 that selects either audio data that was output from the A/D converter 332 or audio data that was supplied from the reproduction processing system 40, and outputs it to an audio encoder 362. The switch 351 and switch 352 are controlled by the control processing system A2.

The image encoder 361 converts the image data that was supplied from switch 351 to image data of another format such as MPEG (Motion Picture Expert Group) format, and outputs the result. The audio encoder 362 converts the audio data that was supplied from switch 352 to audio data of another format such as AC-3, and outputs the result. A multiplexer 37 generates a program stream based on the image data that is output from the image encoder 361 and the audio data that is output from the audio encoder 362, and outputs the result. The above components described above are the main elements of the recording processing system 30.

On the other hand, a drive interface 14 that complies with a standard such as the ATAPI (AT Attachment Packet Interface) is connected to the HD drive 10. Similarly, a drive interface 24 that complies with the standard ATAPI, for example, is connected to the DVD drive 20. The drive interface 24 receives a program stream from the DVD drive that is read from a DVD 21, and outputs it to a first switching unit 15 and reproduction processing system 40. The first switching unit 15 selects either the program stream that is output from the multiplexer 37 of the recording processing system 30 or the program stream that is supplied from the drive interface 24, and outputs it to the drive interface 14. This program stream is then supplied to the HD drive 10 from the drive interface 14 and written on the HD 11.

Also, the drive interface 14 receives a program stream from the HD drive 10 that is read from the HD 11, and outputs it to a second switching unit 25 and reproduction processing system 40. The second switching unit 25 selects either the program stream that is output from the multiplexer 37 of the recording processing system 30 or the program stream that is supplied from the drive interface 14, and outputs it to the drive interface 24. The program stream that is output from this second switching unit 25 is supplied to the DVD drive from the drive interface 24, and written on the DVD 21. The first switching unit 15 and second switching unit 25 are controlled by the control processing system A2.

Next, the reproduction processing system 40 is means for executing various processing on data that is read from the HD 11 or DVD 21, and reproduces that data. An output switching unit 41 that is shown in FIG. 2 selects either a program stream that is supplied from the HD drive 10 by way of the drive interface 14, or a program stream that is supplied from the DVD drive 20 by way of the drive interface 24 according to control from the control processing system A2, and outputs it to a demultiplexer 42. This demultiplexer 42 separates out MPEG format image data and AC-3 audio data from the program stream that is supplied by the output switching unit 41, and outputs the result. A image decoder 431 decodes the image data that is output from the multiplexer 42, and outputs the result to the switch 351 of the recording processing system 30 and a switch 441 of an output switching unit 44. On the other hand, an audio decoder 432 decodes the audio data that is output from the multiplexer 42, and outputs it to the switch 352 of the recording processing system 30 and a switch 442 of the output switching unit 44.

The switch 441 selects and outputs either image data that is supplied from the image decoder 34 of the recording processing system 30 or image data that is supplied from the image decoder 431 according to control from the control processing system A2. Similarly, the switch 442 selects and outputs either audio data that is supplied from the A/D converter 332 of the recording processing system 30 or audio data that is supplied from the audio decoder 432 according to control from the control processing system A2. The audio data that is selected by the switch 442 is converted to an analog audio signal by a D/A converter 472 and output from the output terminal Tout2. An audio output device such as speakers or headphones is connected to this output terminal Tout2.

On the other hand, the image data that is selected by the switch 441 is supplied to a thumbnail OSD (On Screen Display) 45. This thumbnail OSD 45 places images such as text or symbols over the image data that is output from the switch 441. The control processing system A2 specifies the text or symbols that are to be combined with the image data by this thumbnail OSD 45.

A image encoder 46 converts the image data that is output from the thumbnail OSD 45 to a format that corresponds to the display of the display device. The image data that is output from the image encoder 46 A is converted to an analog image signal by a D/A converter 471 and output from an output terminal Tout1. A display device such as a CRT (Cathode Ray Tube) or liquid-crystal panel is connected to this output terminal Tout1.

Next, the control processing system A2 is means for controlling the recording/reproduction system A1 explained above.
The control unit 50 that is shown in FIG. 2 comprises a computation processing unit such as a CPU (Central Processing Unit), and it controls each part of the recording/reproduction device A based on a program in order to realize all of the various processes such as writing data to the HD 11 or DVD 21, or reproducing data that is read from the HD 11 or DVD 21. A memory 51 is means for storing various programs and various data that is used when executing the programs.
More specifically, the memory 51 comprises: ROM (Read Only Memory) that stores the programs that are executed by the control unit 50; and RAM (Random Access Memory) that is used by the control unit 50 as a work area. This RAM temporarily stores data that is input from devices D that are connected to the terminal TA, or data that is output from these devices D.

A light receiving unit 521 receives light that is emitted from a remote control device 60 according to operation by the user, and performs demodulation, then generates operation data as indicated by the contents of the operation from the remote-control device 60 and outputs it to an operation unit. This operation unit 522 comprises various operation control elements (not shown in the figure) such as numeric keys, cursor keys, setting keys and the like, and the operation unit 522 generates operation data for identifying the operation control element that was operated by the user. The operation data that is generated here, and the operation data that is output from the light receiving unit 521 is output to the control unit 50. The control unit 50 sets the operation contents from the user by receiving this operation data. On the other hand, a display unit 53 comprises a display that uses liquid crystals or LED, and based on control from the control unit 50, displays various information such as the contents of operation control performed by the user using the remote-control device 60 or operation control unit 522.

A USB host controller 561 is means for controlling communication that is executed between devices D that are connected to the terminal TA and USB controller 55. The devices D that are connected to terminal TA operate as peripheral devices to the recording/reproduction device A. On the other hand, a USB peripheral controller 562 is means for controlling communication that is executed between devices that are connected to terminal TB and USB controller 55. The devices (for example, a personal computer) that are connected to terminal TB operate as a host to the recording/reproduction device A. The USB controller 55 is means for controlling the USB host controller 561 and USB peripheral controller 562. More specifically, the USB controller 55 outputs data that is received from the external devices D by way of the USB host controller 561 or USB peripheral controller 562 to the control unit 50, and outputs data that is supplied from the control unit 50 to the USN host controller 561 or USB peripheral controller 562. As described above, the USB host controller 561, USB peripheral controller 562 and USB controller 55 function as means for the recording/reproduction device A to communication with each device D.

The construction of the recording/reproduction device A was described above. As shown in FIG. 1, various devices D are connected to the terminal TA of the recording/reproduction device A. Devices that are proposed to be able to be connected to the recording/reproduction device A in this way (devices that comply with the USB standard) are classified into a plurality of classifications according to function or use thereof. For example, a keyboard or mouse is classified as an input device, a digital camera or digital video camera is classified as a imaging device, and memory or memory reader is classified as a memory device. Each device D contains information in an internal memory device that indicates its classification (hereafter, referred to as classification information). On the other hand, classification information for all of the devices D that can sufficiently communication with the control unit 50 by connecting to terminal TA (in other words, devices that comply with the USB standard) is stored beforehand in memory 51. By determining whether or not the classification information that is contained in a devices D matches any of the classification information that is stored in memory 51, the control unit 50 can recognize whether or not the devices D that are connected to the terminal TA are devices that are supported by the recording/reproduction device A.

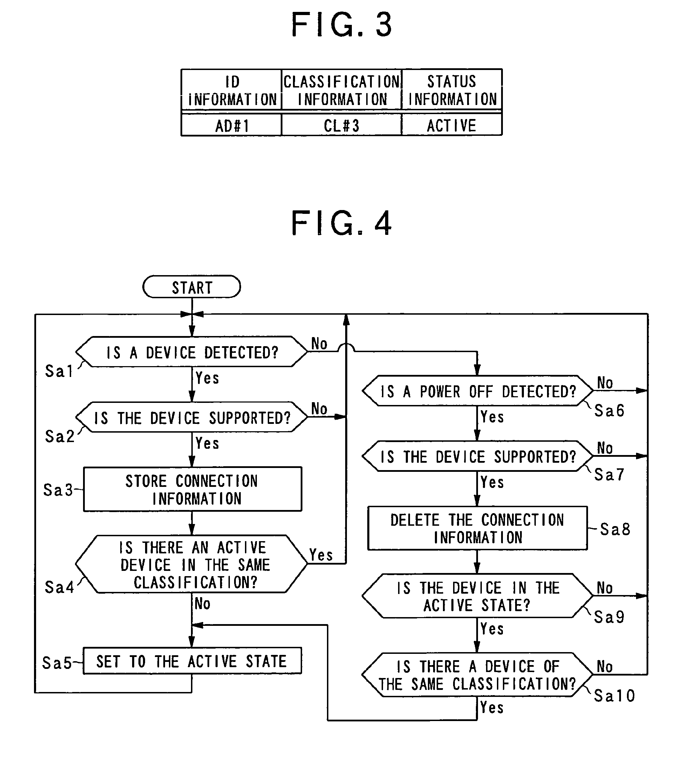

Furthermore, when devices D are connected to the terminal TA as shown in FIG. 1, the control unit 50 generates information related to the devices 50 (hereafter, referred to as 'connection information') and stores it in the memory 51. FIG. 3 is a drawing showing the contents of this connection information. As shown in FIG. 3, the connection information that corresponds to one device D comprises: information that is uniquely assigned to that device D (hereafter, referred to as 'ID information'), classification information that is received from that device D, and information that indicates the status of that device D (hereafter, referred to as 'status information').

In this embodiment, communication with the recording/reproduction device A is not always allowed for all of the devices D that are connected to the recording/reproduction device A, and only specified devices D that are selected based on predetermined rules are set to the active state in which they can communicated with the recording/reproduction device A, and all other devices D are set to the inactive state and not allowed to communicate with the recording/reproduction device A. The status information that is shown in FIG. 3 is information (for example a flag) that indicates whether a device is set to the active state or to the inactive state.

### <A-2: Operation of The Embodiment>

Next, the operation of the recording/reproduction device A of this embodiment will be explained, taking special attention to the method of managing communication with the devices D.

When the power to the recording/reproduction device A is turned ON, the control unit 50 executes in order the programs that are stored in the memory 51, and in so doing executes in order the processing from controlling communication with each of the devices D. FIG. 4 is a flowchart showing the detailed contents of this processing.

As shown in FIG. 4, when this processing starts, the control unit 50 first determines whether or not any new devices D have been detected (step Sa1). When it is determined that no new devices D have been detected, the control unit 50 determines whether or not the power to a device D that is connected to the recording/reproduction device A is turned OFF (including when a device is disconnected) (step Sa6), and when no such devices are detected, the control unit 50 moves processing to step Sa1. In other words, by repeating in order step Sa1 and step Sa6 (polling), the control unit 50 functions as means for detecting the devices D that are connected and when the operation of a device stops.

When it is determined in step Sa1 that a new device D has been detected, the control unit 50 determines whether or not the device (hereafter, referred to as the 'detected device') D is a device that is supported by the recording/reproduction device A (step Sa2). More specifically, the control unit 50 requests classification information from the detected device D, and when the classification information that is sent from the device in response to that request has been registered in advance in the memory 51, the control unit 50 determines that the detected device D is supported, however, when the classification information does not match any of the classification information in the memory 51, the control unit 50 determines that that detected device D is not supported. In step Sa2 when it is determined that the detected device D is not supported, the control unit 50 returns to the processing of step Sa1 without executing any processing for this detected device D.

However, when it is determined in step Sa2 that the detected device D is supported, the control unit 50 generates connection information for the detected device D and stores it in memory 51 (step Sa3). In other words, the control unit 50 assigns ID information to the detected device D and correlates this ID information with the previously acquired classification information and status information that indicates that the inactive state, then writes that connection information in memory 51. Next, the control unit references the classification information and status information that are stored in memory 51 to determine whether or not any devices D that belong to the same classification as the detected device D are already set to the active state (step Sa4). More specifically, the control unit 50 detects classification information that is common with that of the detected device D from memory 51, and when the status information that corresponds to that detected classification information indicates the active state, the control unit determines 'Yes' for the judgment of step Sa4, however, when the status information indicates the inactive state or when no classification information is detected that is common with that of the detected device D (in other words, when a device D having the same classification was not connected up to that point), the control unit 50 determines 'No' for the judgment in step Sa4.

Here, when it is determined that there is no device D belonging to that classification that is in the active state, the control unit 50 updates the status information of the detected device D to contents indicating the active state and sets that device D to the active state (step Sa5). Furthermore, by outputting the classification information of the detected device D to the thumbnail OSD 45, the control unit 50 has the display device that is connected to the output terminal Tout1 display the classification information of the detected device D. However, when it is determined that another device D that belongs to the same classification as the detected device D is already in the active state (step Sa4: Yes), the control unit 50 does not update the status information of the detected device D (in other words, leaves the contents that indicate the inactive state) and moves to the processing of step Sa1. Here, the device D that is in the inactive state is not allowed to transmit image data or audio data to the recording/reproduction device A, and transmission of image data or audio data from the recording/reproduction device A to that device D is not allowed. As described above, the control unit 50 of this embodiment functions as means for selecting whether to set the devices D that are connected to the recording/reproduction device A to either the active state or inactive state.

Next, when the power to a device D that is already connected to the recording/reproduction device A is turned OFF (step Sa6: Yes), the control unit 50 uses the same procedure as used in step Sa2 to determine whether or not that device (hereafter, referred to as a 'stopped device') D is a device that is supported (step Sa7). Here, when it is determined that the stopped device D is supported, the control unit 50 moves to the processing of step Sa1 without executing any processing for the stopped device D.

On the other hand, when it is determined that the stopped device D is supported, the control unit 50 deletes the connection information for that stopped device from memory 51 (step Sa8). Moreover, by determining whether or not the status information of the connection information that was deleted in step Sa8 indicated the active state, the control unit 50 determines whether or not the stopped device D was in the active state up to that time (step Sa9). Here, when it is determined that the stopped device D was not in the active state, the control unit 50 moves to the processing of step Sa1.

However, when it is determined that the stopped device D was in the active state up to that time, the control unit 50 executes processing for changing other devices D that are in the inactive state and that belong to the same classification as the stopped device D to the active state. In other words, by determining whether or not classification information that is common with this stopped device D is stored in the memory 51, the control unit 50 determines whether or not other devices D that are in the inactive state and that belong to the same classification as the stopped device D are connected to the recording/reproduction device A (step Sa10). Here, when it is determined that no devices D of the same classification are connected, the control unit 50 moves to the processing of step Sa1. In this case, there are no devices D that are in the active state that belong to the same classification as the stopped device D.

When it is determined in step Sa10 that there is a device D of the same classification, the control unit 50 moves to the processing of step Sa5, and updates the status information of the other device D that was in the inactive state up to that time to contents that indicate the actives state, and sets that device D to the active state. Here, when there is a plurality of devices D that belong to the same classification as the stopped device D connected to the recording/reproduction device A, the control unit 50 sets the device D from among these devices D that was connected to the recording/reproduction device A first to the active state. The connection order of the devices D is identified by referencing ID information that is included in the connection information. As described above, the control unit 50 of this embodiment functions as means for changing the devices D from the inactive state to the active state. In step Sa5, by outputting the classification information of a device that has newly been set to the active state to the thumbnail OSD 45, the control unit 50 notifies the user of that device D.

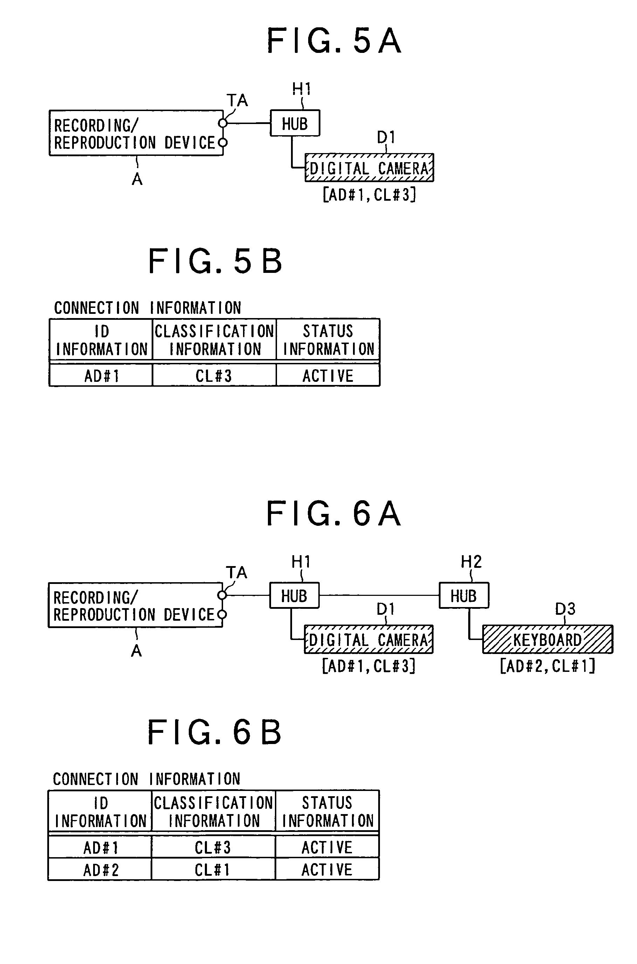

Next, referring to FIG. 5 to FIG. 9, the operation explained above will be explained in more detail. In each of these drawings, the ID information (AD#1, etc.) and the classification information (CL#1, etc.) of the devices Dare given inside blocks that indicate the devices.

As shown in (a) of FIG. 5, the case in which a digital camera D1 that belongs to the classification 'CL#3' is connected to the recording/reproduction device A by way of a hub H1 is assumed. In this case, as shown in (b) of FIG. 5, the connection information, which includes ID information 'AD#1' that is assigned to the digital camera D1 and classification information 'CL#3' that is acquired from the digital camera D1, is written in memory 51 (step Sa3). Moreover, in this state, since no other devices D belonging to the same classification as the digital camera D1 are connected to the recording/reproduction device A (step Sa4: No), the contents of the status information of the digital camera D1 indicates the active state (step Sa5). In FIG. 5 to FIG. 9, devices D that are in the active state are placed in blocks with diagonal lines.

Furthermore, as shown in (a) of FIG. 6, when a keyboard D3 belonging to the classification 'CL#1' is connected to the recording/reproduction device A by way of a hub H2, then as shown in (b) of FIG. 6, the connection information of the keyboard D3 is stored in memory 51, and the contents of the status information of that connection information indicates the active state. This is because that at this point there are still no devices D other than the keyboard that belong to the classification 'CL#1' that are connected (step Sa4: No).

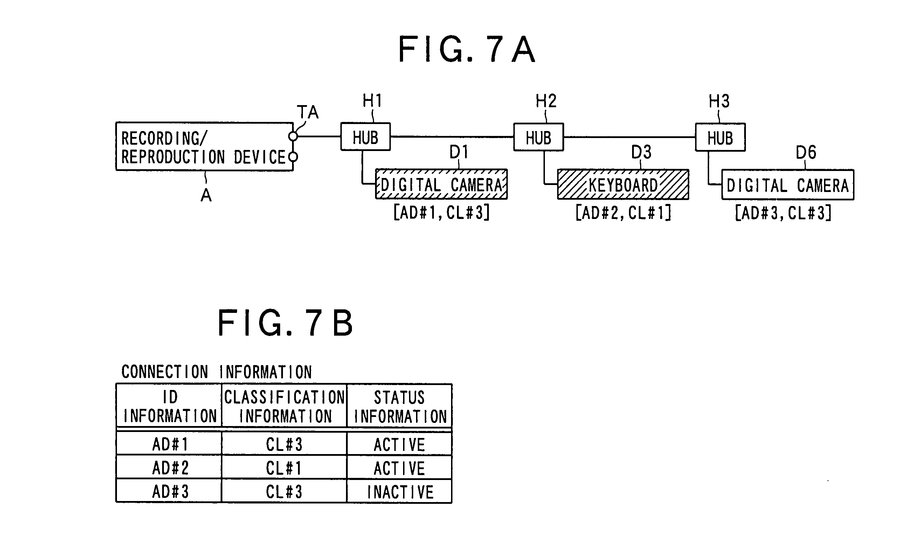

Next, as shown in (a) of FIG. 7, the case in which a digital camera D6 is connected to the recording/reproduction device A by way of a hub H3, and the connection information that corresponds to that digital camera D6 is written in memory 51 is assumed. As shown in (b) of FIG. 7, at this point, there is already a digital camera D1 that belongs to the same classification as the digital camera D6 that is set to the active state. Therefore, the result of the judgment in step Sa4 becomes 'Yes', and the digital camera D6 is set to the inactive state. In other words, transmission of image data or audio data from the digital camera D6 to the recording/reproduction device A, and transmission of image data or audio data from the recording/reproduction device A to the digital camera D6 is not allowed.

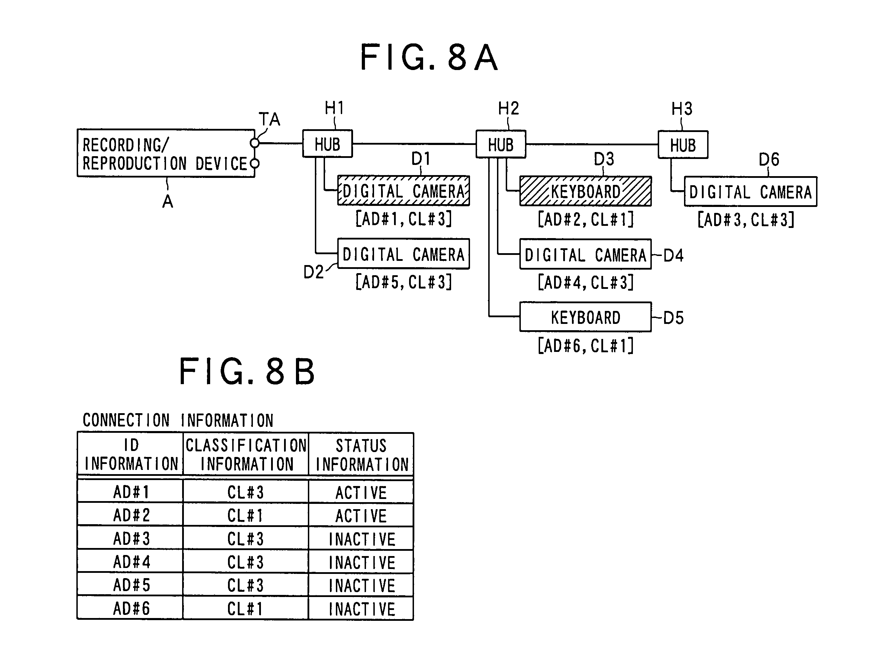

After that, the same processing is executed when a new device D is connected. For example, in (a) of FIG. 8, the case is assumed in which digital cameras D2 and D4 that belong to the classification 'CL#3' and a keyboard D5 that belong to classification 'CL#1' are connected. At this point, the digital camera D1 and keyboard D3 are already set to the active state, so as shown in (b) of FIG. 8, the digital cameras D2 and D4 and keyboard D5 are set to the inactive state.

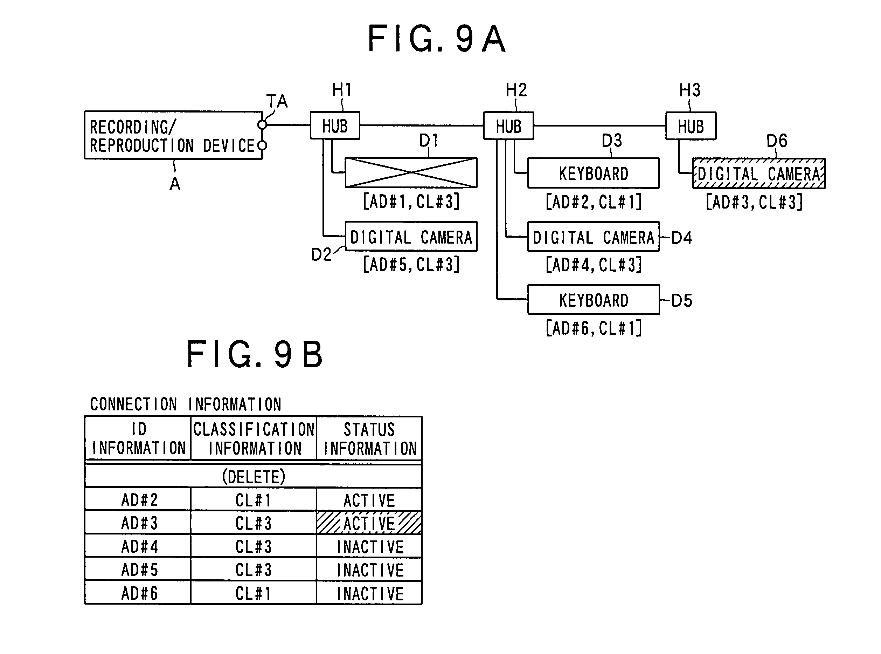

Next, as shown in (a) of FIG. 9, the case is assumed in which the power to the digital camera D1 is turned OFF (step Sa6: Yes). In this case, as shown in (b) of FIG. 9, the connection information for the digital camera D1 is deleted from the memory 51 (step Sa8). Also, since up until this time the digital camera D1 was in the active state, the result of the judgment in step Sa9 is 'Yes'. Furthermore, at that point, the digital cameras D6, D2 and D4 that belong to the same classification as the digital camera D1 are connected to the recording/reproduction device A, so the result of the judgment in step Sa10 is 'Yes'. Also, since of these digital cameras, digital camera D6 was the first to be connected to the recording/reproduction device A, so in step Sa5 after step Sa10, the contents of the status information for digital camera D6 are updated to indicated the active state, as shown in (b) of FIG. 9. Therefore, transmission of image data or audio data from digital camera D6 to the recording/reproduction device A, and transmission of image data or audio data from the recording/reproduction device A to digital camera D6 is allowed.

In the explanation above, the case was described in which devices D are connected in order after the power to the recording/reproduction device A is turned ON, however, there is also the case in which the power to the recording/reproduction device A is turned ON after connecting a plurality of devices D. In this case, the control unit 50 detects these devices in order in step Sa1. When doing this, the order that the control unit 50 detects the devices D is arbitrary. For example, in the case where devices are connected hierarchically as shown in FIG. 1, the devices D may be detected in order from the devices D that are located in a shallow level (for example digital camera D1 or D2 that are connected to hub H1) toward devices located in a deep level (for example, digital camera D6 that is connected to hub H3).

As explained above, in this embodiment, devices that are connected to the recording/reproduction device A are selectively set to the active state, so compared with construction in which communication with all of the devices D is executed in parallel, the processing capability the is required by the control unit 50 and USB controller 55, and the memory capacity required by the memory 51 can be reduced. Therefore, it is possible to reduce the cost for manufacturing the recording/reproduction device A. Furthermore, in this embodiment, when the power to a device D that is in the active state is turned OFF, the state of another device that up to that time was in the inactive state is changed to the active state. Therefore, it is possible to change the devices that are in the active state without having to have the user perform the troublesome work of specifying a device D to set to the active state or to turn the power to the recording/reproduction device A OFF and ON again.

### <B: Second Embodiment>

Next, a second embodiment of the invention will be explained. In the first embodiment explained above, an example was given of construction that included classification information in the connection information. However, in this embodiment, the connection information does not include classification information. The same reference numbers are given to elements that are the same as those described in the first embodiment, and an explanation of those parts will be omitted.

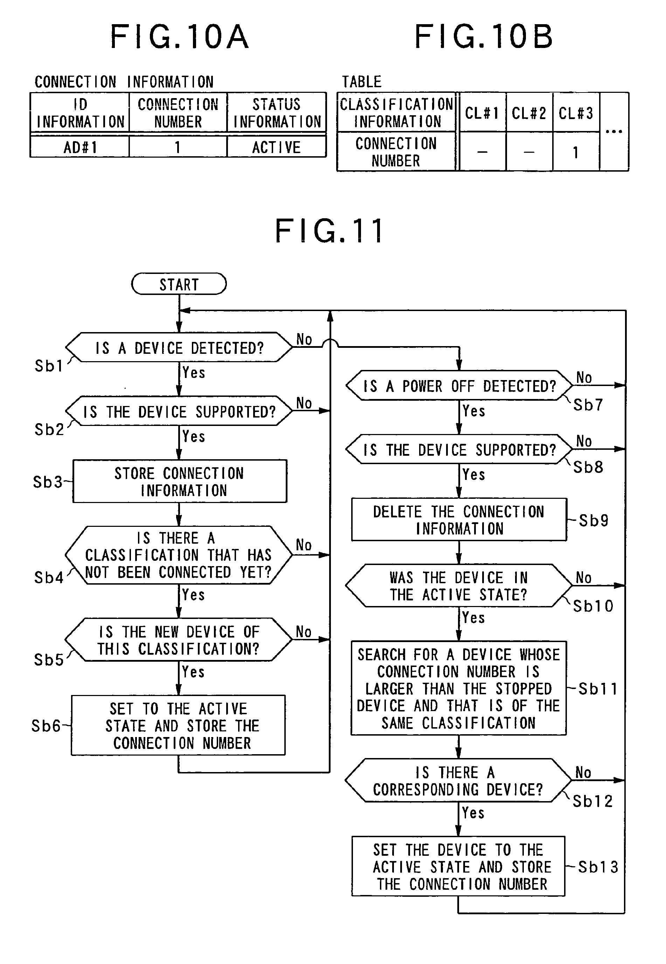

FIG. 10 is a drawing showing the contents of information that is stored in the memory 51 of this embodiment. As shown in the FIG. 10, connection information for each of the devices D connected to the recording/reproduction device A is stored in the memory 51. The connection information in this embodiment includes ID information and status information as in the first embodiment, and also includes a connection number that indicates the order that each device D was connected to the recording/reproduction device A. The connection numbers are a series of numbers that are assigned to the devices D that are connected to the recording/reproduction device A in the order that the devices D were connected. For example, the connection number '1' is assigned to the device D that was connected to the recording/reproduction device A first, and the connection number '2' is assigned to the device D that was connected next.

Also, as shown in FIG. 10, a correlation table, which correlates classification information for each of the classifications supported by the recording/reproduction device A with the connection number of devices D from among all of the devices of each classification that are actually connected to the recording/reproduction device A and that are in the active state, is stored in the memory 51. For example, in FIG. 10, an example is shown of the case in which of the devices D belong to the classification 'CL#3', the device D having the connection number '1' is in the active state.

FIG. 11 is a flowchart showing the operation of the control unit 50 of this embodiment. As shown in FIG. 11, when the power to the recording/reproduction device A is turned ON, the control unit 50 writes the connection information for the detected devices D into the memory 51 by the same procedure as in steps Sa1 to Sa3 shown in FIG. 4 (step Sb1 to step Sb3). However, the connection information that is generated in step Sb3 comprises ID information and connection information as shown in FIG. 10, and does not include classification information.

Next, the control unit 50 determines whether or not of the classifications supported by the recording/reproduction device A there is a classification for which devices D have still not been connected (step Sb4). When it is determined that there are no such classifications (or in other words there is one or more devices connected for each classification), the control unit moves to the processing of step Sb1. However, when it is determined that there is a classification of which no devices have been connected yet, the control unit 50 determines whether or not the classification of a detected device D corresponds with the classification that is the obj ect of judgment in step Sb4 (or in other words, whether or not there is a new device D that is connected to that classification for the first time) (step Sb5).

When the result of the judgment in step Sb5 is 'Yes', the control unit 50 changes the contents of the status information of the detected device D to indicate the active state, and sets that device D to the active state, then correlates and stores that connection number with the classification information for the detected device D in the correlation table that is stored in the memory 51 (step Sb6). From this processing, the contents of the correlation table include the connection numbers of devices D in the active state for each classification. Also, as in step Sa5 shown in FIG. 4, in step Sb6 the classification information for the device D that has newly become set to the active state is output to the thumbnail OSD 45.

On the other hand, in the case where the power to a device D that is connected to the recording/reproduction device A is turned OFF, the control unit 50 deletes the connection information for the stopped device D from the memory 51 by the same procedure as in steps Sa6 to Sa8 shown in FIG. 4 (step Sb7 to step Sb9). Also, when it is determined that this stopped device D was in the active state (step Sb10), the control unit 50 makes classification inquiries in order of the devices D having connection numbers that are larger than that of the stopped device D, and searches for a device D that belongs to the same classification as the stopped device D (Sb11). When such a device D is found (steps Sb12 : Yes), the control unit 50 updates the status information of the found device to information that indicates the active state, and updates the connection number that corresponds to the classification information of that device D in the correlation table to the connection number of the device D that was found in step Sb11 (step Sb13). Furthermore, the control unit 50 outputs the classification information of the device D that was newly set to the active state to the thumbnail OSD 45. On the other hand, when it is determined in step Sb12 that there are no corresponding devices D, the control unit 50 moves to the processing of step Sb1.

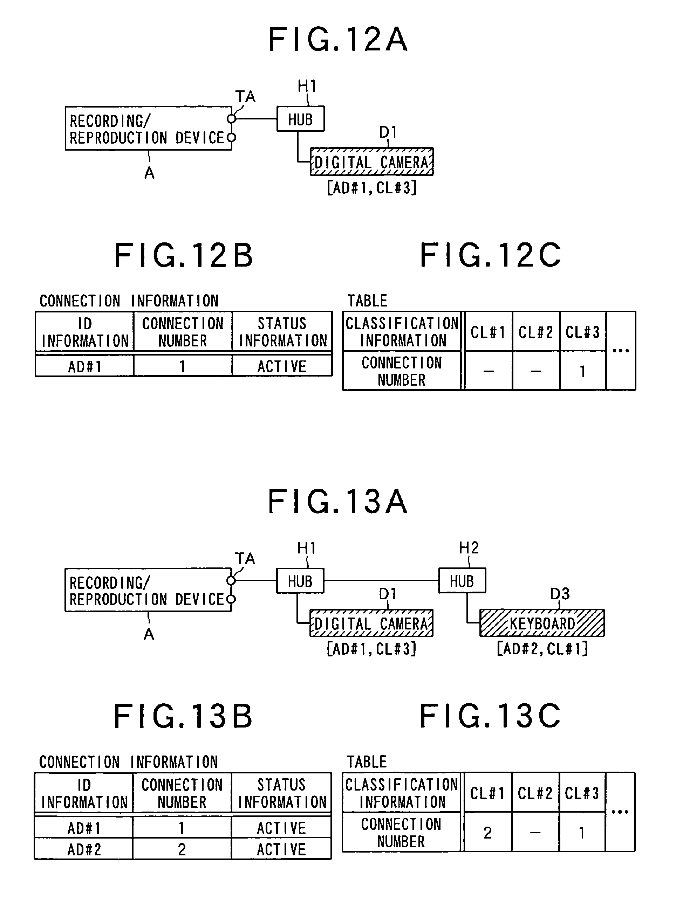

Next, the operation of this embodiment will be explained in more detail. First, as shown in (a) of FIG. 12, when a digital camera D1 is connected to the recording/reproduction device A, then as shown in (b) of FIG. 12, connection information that includes the ID information 'AD#1' for this digital cameral D1, the connection number '1' and the status information is stored in the memory 51 (step Sb3). In this state, the results of the judgments in step Sb4 and step Sb5 are both 'Yes', so the contents of the connection information indicates the active state, and as shown in (c) of FIG. 12, the connection number '1' of the digital camera D1 is correlated with the classification information 'CL#3' in the correlation table (step Sb6). Next, as shown in (a) of FIG. 13, the same is true for the case in which a keyboard D2 having the classification 'CL#1" is connected to the recording/reproduction device A, and as shown in (b) of FIG. 13, the connection information for the keyboard D2 is stored in the memory 51, and as shown in (c) FIG. 13, the connection number '2' for the keyboard D2 is correlated with classification information 'CL#1' in the correlation table (step Sb6).

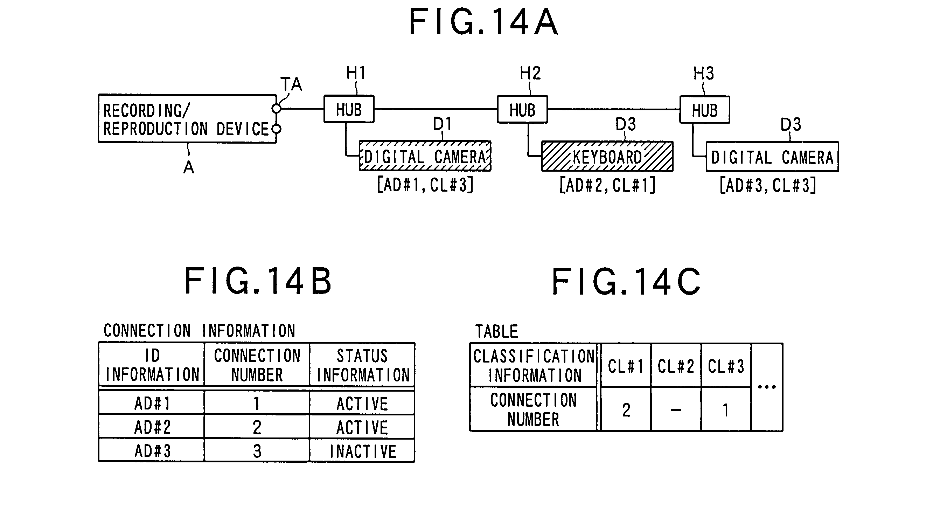

Next, as shown in (a) of FIG. 14, the case is assumed in which a digital camera D3 is connected to the recording/reproduction device A. In this case, as shown in (b) of FIG. 14, in step Sb3, connection information that includes the ID information 'AD#3' for the digital camera D3 and the connection number '3' are stored in the memory 51. However, since a digital camera D1 having the same classification as the digital camera D3 is already connected, the result of the judgment in step Sb5 becomes 'No' . Therefore, as shown in (c) of FIG. 14, the contents of the correlation table are not changed from that shown in FIG. 13.

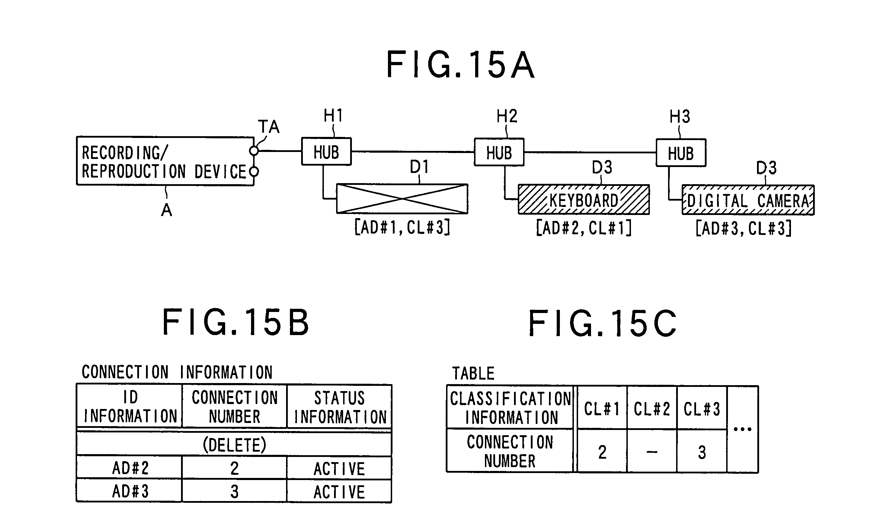

Next, as shown in (a) of FIG. 15, when the power to the digital camera D1 is turned OFF from the state shown in (a) of FIG. 14, then as shown in (b) of FIG. 15, the connection information for the digital camera D1 is deleted from memory 51 (step Sb9). Furthermore, a classification information inquiry is made in order of connection numbers of the devices D to which connection numbers larger than that of this digital camera D1 are assigned (step Sb11), and devices D that belong to the same classification as the digital cameral D1 are searched for. Here, there is a device D whose connection number is '1' larger than the connection number '1' of the digital camera D1, and that is device D is the keyboard D2 having a connection number '2', however since the classification information is 'CL#1', that device is not the object of the search in step Sb11. On the other hand, the device D that has the next greater connection number of '3' is a digital camera D3 whose classification information is 'CL#3', so this device D is the object of the search in step Sb11. Therefore, the digital camera D3 is newly set to the active state, and as shown in (c) of FIG. 15, the connection number that corresponds to the classification information 'CL#3' in the correlation table is updated to the connection number '3' of the digital camera D3.

As was explained above, in this embodiment as well, the devices D that are connected to the recording/reproduction device A are selectively set to the active state, and when it is detected that the operation of a device D that is in the active state has stopped, another device D that has been in the inactive state up to that point is set to the active state, so the same effect as obtained in the first embodiment is obtained. In addition, in this embodiment, it is not necessary to store classification information for each device D that is connected to the recording/reproduction device A, so this embodiment has the advantage in that it can reduce the capacity required by the memory 51 even more than in the first embodiment.

### <C: Third Embodiment>

Next, a third embodiment of the invention will be explained. In each of the embodiments explained above, examples of construction are given in which each of the devices D are set to the active state in the order that they are connected to the recording/reproduction device A. However, unless the devices D that have been set to the active state contain data for performing the original function of the device D in relationship to the recording/reproduction device A, the device cannot be effectively used by the user even though it is set to the active state. For example, the digital camera is connected to the recording/reproduction device A with the main object of the digital camera to be transferring image data that was taken and recorded by the digital camera to the recording/reproduction device A, however when image data is not stored in the digital camera, there are few merits for the user even though the digital camera is in the active state. Therefore, in this embodiment, construction is such that only in the case when a device D that is connected to the recording/reproduction device A contains specified data is the device D set to the active state. In this embodiment, the same reference numbers are given to the elements that are the same as those in the first embodiment, and an explanation of them is omitted.

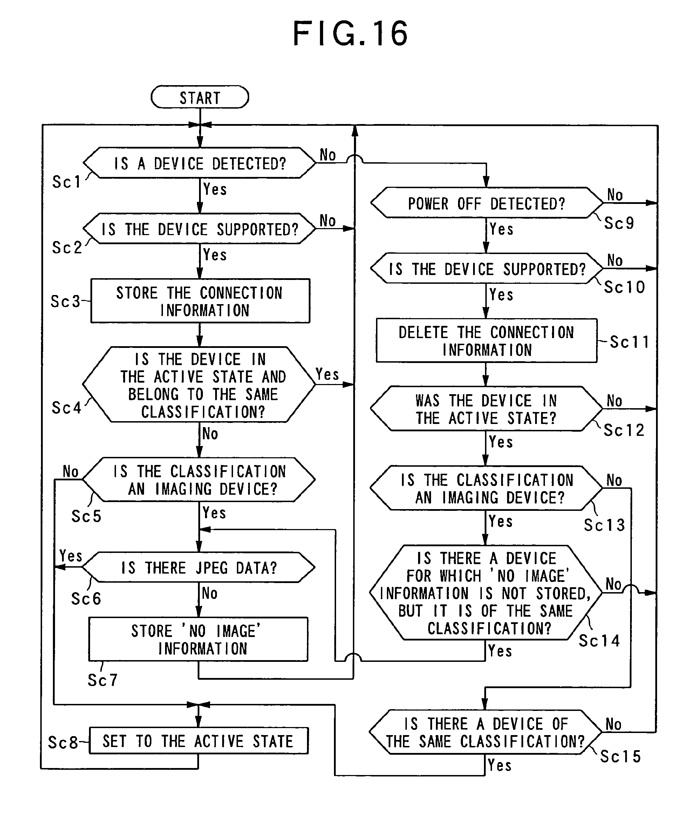

FIG. 16 is a flowchart showing the operation of the control unit 50 of the recording/reproduction device A of this embodiment. As shown in FIG. 16, after the power to the recording/reproduction device A is turned ON, the control unit 50 first generates connection information for the detected device D according to the same procedure as steps Sa1 to Sa4 shown in FIG. 4, and stores that connection information in the memory 51 (step Sc1 to Sc4). Also, in step Sc4 when it is determined that there are no devices D in the active state that belong to the same classification as the detected device D, the control unit 50 determines whether or not the classification information of the detected device D corresponds to classification information of an imaging device (step Sc5). Here, when it is determined that the device D does not correspond to classification information of an imaging device (for example, when the detected device is a keyboard), as in the first embodiment, the control unit 50 sets the detected device to the active state and outputs the classification information thereof to the thumbnail OSD 45 (step Sc8), then moves to the processing of step Sc1.

On the other hand, when it is determined that the detected device belongs to the classification of an imaging device, the control unit 50 determines whether or not the detected device D contains image data in JPEG (Joint Photographic Coding Experts Group) format (hereafter, referred to as 'JPEG data') (step Sc6). This judgment is executed, for example, by acquiring the file extension that is contained by the detected device D from a FAT (File Allocation Table). Here, when it is determined that the detected device D does not contain JPEG data, the control unit 50 adds information (hereafter, referred to as 'no image data') to the connection information of the detected device D that indicates that the detected device D does not contain JPEG data (step Sc7), and then moves to the processing of step Sc1. In this case, the contents of the status information of the detected device D continues to indicate the inactive state. On the other hand, when it is determined that the detected device D contains JPEG data, the control unit 50 updates the contents of the status information of the detected device D to indicate the active state in the same way as for a device D having a classification other than an imaging device (step Sc8), then moves to the processing of step Sc1. From the processing described above, for devices D that belong to the classification of an imaging device, only devices D that contain JPEG data are set to the active state, and devices D that do not contain JPEG data are set to the inactive state.

On the other hand, when the power to a device D that is connected to the recording/reproduction device A is turned OFF, the control unit 50 deletes the connection information of the stopped device D from the memory using the same procedure as steps Sa6 to Sa8 shown in FIG. 4 (step Sc9 to step Sc11). Next, when it is determined that this stopped device D was in the active state (step Sc12: Yes), the control unit 50 determines whether or not the stopped device D was a device that belonged to the classification of an imaging device (step Sc13). Here, when it is determined that the stopped device D does not belong to the classification of an imaging device (for example, the stopped device D is a keyboard), the control unit 50 determines whether or not another device D that belongs to the same classification as the stopped device D is connected to the recording/reproduction device A (stepSc15). Moreover, when the result of the judgment in step Sc15 is 'Yes', the control unit 50 sets the device D to the active state (step Sc8), and moves to the processing of step Sc1. However, when the result of the judgment in step Sc15 is 'No', the control unit 50 bypasses step Sc8 and moves to the processing of step Sc1.
In other words, the same processing as performed in the first embodiment is performed for a device D that belongs to a classification other than an imaging device.

On the other hand, in step Sc13 when it is determined that the stopped device D belongs to the classification of an imaging device, the control unit 50 determines whether or not there is a device D that belongs to the same classification as the stopped device D (imaging device), and for which 'no image' information has not been added to the connection information thereof (step Sc14). Also, when the result of this judgment is 'No', the control unit 50 moves to the processing of step Sc1 without changing the status of any device D with that classification. On the other hand, when the result of the judgment in step Sc14 is 'Yes', the control unit 50 moves to the processing of step Sc6. In other words, the control unit 50 determines whether or not the device D that was determined in step Sc14 contains JPEG data, and only when the device does contain JPEG data does the control unit 50 move change the status of that device D to the active state.

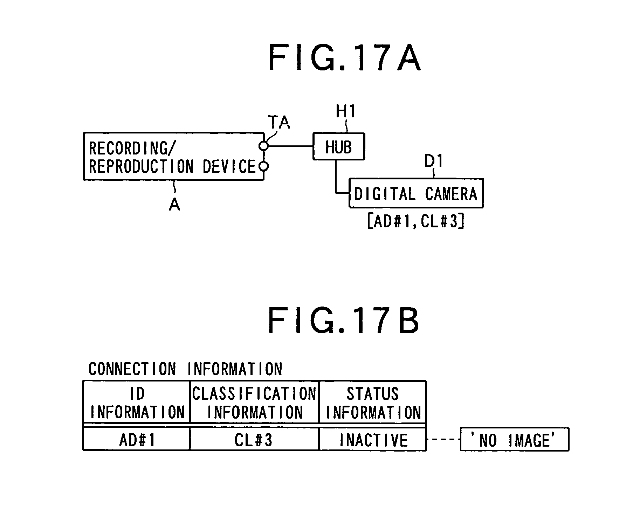

Next, the operation of this embodiment will be explained in detail. First, as shown in (a) of FIG. 17, when a digital camera D1 that contains no JPEG data is connected to the recording/reproduction device A, the result of the judgment in step Sc6 becomes 'No'. Therefore, as shown in (b) of FIG. 17, the digital camera D1 is set to the inactive state, and 'no image' information is added to the connection information of that digital camera D1 (step Sc7).

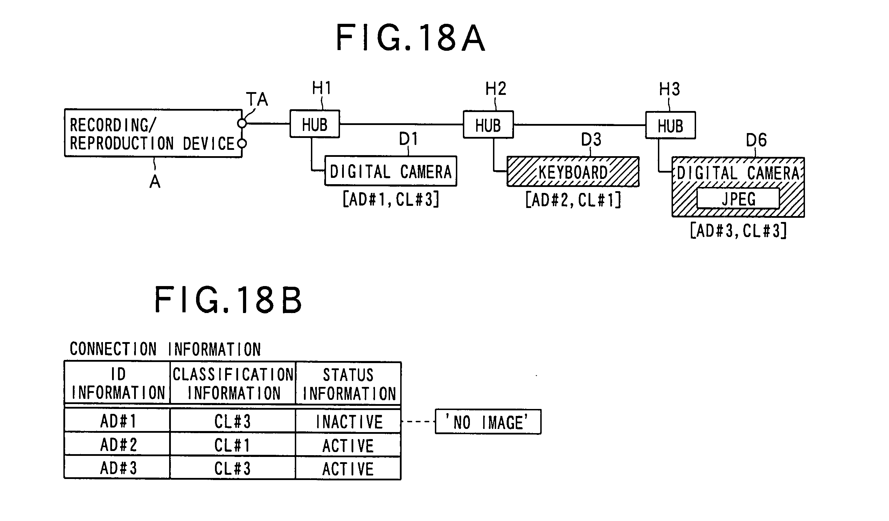

Next, as shown in (a) of FIG. 18, when a digital camera D6 that contains JPEG data is connected to the recording/reproduction device A after the keyboard D3 is connected, the result of the judgment in step Sc6 becomes 'Yes', so in step Sc8, the content of the status information of the digital camera D6 is changed to indicate the active state. In other words, as shown in (b) of FIG. 18, the status of the digital camera D6 is set to the active state, while that of the digital camera D1 is kept set to the inactive state.

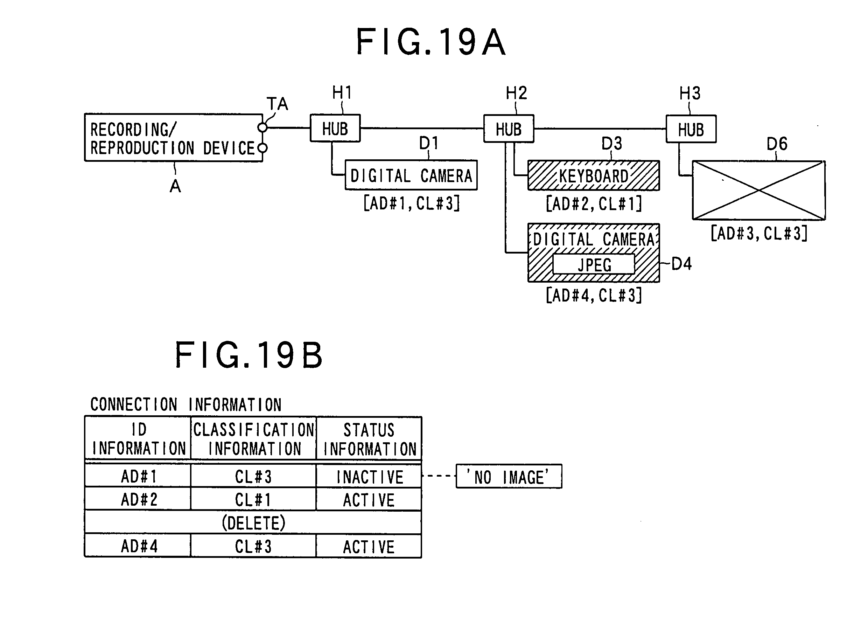

Furthermore, as shown in (a) of FIG. 9, the case is assumed in which a digital camera D4 containing JPEG data is connected to the recording/reproduction device A. In this stage, the digital camera D6 is already set to the active state (step Sc4: Yes), so the new digital camera D4 is set to the inactive state. In this state, when the power to the digital camera D6 that is in the active state is turned OFF, the connection information that corresponds to the digital camera D6 is deleted from memory 51 as shown in (b) of FIG. 19 (step Sc11). Furthermore, as shown in (b) of FIG. 19, the digital camera D4 that belongs to the same classification as digital camera D6 and that contains JPEG data is newly set to the active state (step Sc8). In this state as well, the digital camera D1 continues to be set to the inactive state.

As was explained above, in this embodiment, containing JPEG data is a condition for changing to the active state, which adds convenience to the user that connects a digital camera to the recording/reproduction device A with the object of acquiring JPEG data. For example, with construction in which it is possible for a digital camera to become set to the active state regardless of whether or not it contains JPEG data, when the user connects a digital camera D1 that does not contain JPEG data to the recording/reproduction device A and then connects a digital camera D6 that contains JPEG data, in order to uses the JPEG data of digital camera D6 it is necessary to turn the power OFF to the digital camera D1. However, in this embodiment, a digital camera D1 that does not contain JPEG data is not set to the active state, and when a digital camera D6 that contains JPEG data is connected, then for the first time that digital camera D6 is set to the active state, and it is not necessary to perform the work of turning OFF the power to the digital camera D1 that was connected first.

In this embodiment, image data having JPEG format was taken to be the image data that is a condition for changing to the active state, however, containing other image data such as image data having MPEG format can also be used as a condition for changing to the active state. Also, it is possible to have a plurality of formats of image data that will satisfy this condition. For example, construction can be employed in which by containing image data having at least one of JPEG format or MPEG formation it is possible to change to the active state. In other words, any construction for changing to the active state is possible as long as a determination is made of whether or not the device D contains a pre-determined kind of data, and the status of the device D is changed to the active state only when the device D contains that pre-determined kind of data.

### <D: Variations>

Various variations can be added to each of the embodiments. Examples of the forms of some variations are described in detail below. It is also possible to suitably combine the variations below.

### (1) Variation 1

In each of the embodiments, examples of construction were given in which the devices D to be set to the active state were selected according to each classification, however, construction can also be such that devices D to be set to the active state can be selected from among all of the devices D that are connected to the recording/reproduction device A regardless of the classifications of each of the devices D. When considering the possibility that a plurality of devices D belonging to different classifications could be used by the user at the same time (for example, using a digital camera and keyboard at the same time), convenience is further improved by construction in which the devices D to be set to the active state are selected regardless of the classification of the devices, which is desirable.
Also, in the case of construction in which the devices D to be set to the active state are selected regardless of the classification of the devices, when the power to one digital camera is turned OFF, for example, the keyboard may be changed to the active state even though the intention of the user is to use a different digital camera. With each of the embodiments, devices that are to be set to the active state are selected according to classification, there is the advantage in that this kind of problem of not matching the user's intention can be easily solved.

### (2) Variation 2

In each of the embodiments, examples of construction were given in which only one device D belonging to each classification is set to the active state, however, construction is also possible in which a plurality of devices D belonging to one classification can be set to the active state. For example, construction can be such that after going through the states shown in (a) of FIG. 1 to (a) of FIG. 8 and reaching the state in which device D1 to device D6 are connected to the recording/reproduction device A as shown in (a) of FIG. 9, two digital cameras D1 and D6 that belong to classification 'CL#3' can both be set to the active state. In this state, when the power to the digital camera D1 is turned OFF, the digital camera D6 is kept as is in the active state, and the digital camera D2 that belongs to the same classification is newly set to the active state. With this construction as well, when compared with construction in which communication is executed at the same time for all of the devices D that are connected to the recording/reproduction device A, the effect that is expected for all of the embodiments of reducing the processing capability that is required by the control unit 50, and the capacity required by the memory 51 is obtained.

The number of devices D that can be set to the active state for one classification is set according to the processing capability of the control unit 50. For example, when the control unit 50 has excess processing capability, there is no problem in also allowing a plurality of devices D to be set to the active state. Also, the number of devices D that are set to the active state can be the same for each classification, or can be set so there is a different number of devices D that are set to the active state for each classification.

### (3) Variation 3

In each of the embodiments, examples of construction were given in which status information is generated that indicates whether devices are in the active state or inactive state, however, the formof the information for recognizing the status of each device (whether a device is in the active or inactive state) can be arbitrarily changed. For example, construction can be such that information that indicates that a device D is in the active state is added to connection information for that device D, or information indicating that a device D is in the inactive state is not added to the connection information for that device D. In short, as long as connection information is stored in a form so that it is possible for the control unit 50 to recognize whether the devices D are in the active state or inactive state, the information can be in any form.

In each of the embodiments, an example of a recording/reproduction device A was used that records or reproduces image data or audio data, however, the information processing device of the embodiments are not limited to this example. For example, a recording device that records at least image data or audio data on a HD 11 or DVD 21, a reproduction device that reproduces that data, or various devices that perform specified computational processing on various data that includes image data or audio data correspond to the information processing device of these embodiments.

### (5) Variation 5

In these embodiments, examples were given of a TA terminal whose construction complied with USB standard, however the form of the terminal TA to which the devices D are connected can be changed arbitrarily. For example, construction can be such that the devices D are connected to a terminal TA that complies with other standards such as IEEE1394.

## Claims

1. An information processing device comprising:
a management device for setting a plurality of devices to either an active state or an inactive state;
a detection device for detecting when operation of a device that is in the active state stops; and
a change device for changing the status of another device that is the inactive state to the active state when the detection device detects that operation of a device has stopped.

2. The information processing device of claim 1 wherein
when the detection device detects that the operation of a device in the active state has stopped, the change device changes the status of another device that was connected to the information processing device after the detected device and that is in the inactive state to the active state.

3. The information processing device of claim 1 or claim 2 further comprising:
a first memory device for correlating and storing ID information for each device that is connected to the information processing device, and status information that indicates whether the devices are in the active state or inactive state; wherein
a change device changes the status of a device, which is identified by ID information that is correlated with status information that indicates that the device in the inactive state, to the active state.

4. The information processing device of any one of the claims 1 to 3, wherein
the devices that are connected to the information processing device are classified into a plurality of classifications; and
the management device sets the status of each of the devices in each classification to either the active state or inactive state.

5. The information processing device of claim 4, further comprising:
a second memory device for storing classification information that indicates the classification of each device that is connected to the information processing device; wherein
the change device changes the status of another device, which is in the inactive state and whose classification information that is stored in the second memory device is the same as that of the device whose operation is detected by the detection device to have stopped, to the active state.

6. The information processing device of claim 4 further comprising:
an assignment device for assigning connection numbers to devices in the order of connection to the information processing device; and wherein
when the detection device detects that the operation of a device has stopped, the change device specifies the classification of the devices in the order of connection numbers that were assigned by the assignment device, and when a device is specified that has the same classification as the device whose operation what detected by the detection device to have stopped, changes the status of the specified device from the inactive state to the active state.

7. The information processing device of any one of the claims 1 to 6, further comprising:
a judgment device for determining whether or not specified data is stored in devices that are connected to the information processing device; wherein
the management device selectively sets devices, which were determined by the judgment device to store the specified data, to the active state; and
when the detection device detects that the operation of a device in the active state has stopped, the change device changes the status of another device, which is in the inactive state and which was determined by the judgment device to store the specified data, to the active state.

8. A program that causes a computer to execute:
a management process of setting a plurality of devices to either an active state or an inactive state;
a detection processing of detecting when operation of a device that is in the active state stops; and
a change process of changing the status of another device that is the inactive state to the active state when the detection device detects that operation of a device has stopped.
